# EUROPEAN PATENT SPECIFICATION

(11) **EP 2 796 028 B1**
(45) Date of publication and mention of the grant of the patent: **17.08.2016**
(21) Application number: 14164763.6
(22) Date of filing: 15.04.2014
(51) Int. Cl.: A01B 59/041

(54) **Implement linkage locking mechanism**
Verriegelungsmechanismus für Unterlenker
Verrouillage pour bras de levage

(30) Priority: 26.04.2013 GB 201307543
(43) Date of publication of application: 29.10.2014
(73) Proprietor: AGCO International GmbH, 8212 Neuhausen am Rheinfall (CH)
(72) Inventor: Stich, Ulrich, 87616 Marktoberdorf (DE)
(74) Representative: AGCO Intellectual Property Department

(56) References cited:
- EP-A1- 1 745 685
- DE-A1- 4 208 985
- GB-A- 1 203 345

## Description

The present invention relates to mechanisms for controllably holding or releasing a movable linkage and particularly, but not exclusively, to such mechanisms used with the lower links of a three-point linkage on the front or rear of an agricultural vehicle such as a tractor.

Such a locking mechanism, used for the lateral stabilization of each of the two lower linkage arms of an equipment mounting linkage of an agricultural tractor, is described in the commonly-owned European patent EP-B-1 745 685. The linkage arms are each provided with a support strut which is connected by means of a pivot bolt to a pivoting pivot arm mounted on a bracket secured to the tractor. The pivot arm interacts with a stop disc which is adjustable manually between a locked position, in which a one stop element has the effect of lateral stabilization of an implement connected between the linkage arms against movement away from a central position, and an unlocked position, in which a second stop suspends the lateral stabilization of the implement. With the stop in the locked position an implement carried by the linkage is stabilized against movement from the central position in all vertical positions, and with the stop in the unlocking position and the linkage arms in a lowered position the implement is not stabilized but in a fully raised position of the linkage arms the implement is stabilized against movement away from the central position. Each support strut has an extension which extends outwards beyond the pivot bolt and the extension is joined to a link plate. The link plate has a first formation in the form of a slot which engages a second formation in the form of a pin secured to the bracket, and with the stop disc pivoted into the unlocked position, at a predetermined raising height of the lift arms and the support struts below the fully raised position, a stop formed on the link plate comes into contact with the second formation thus stabilizing the implement against movements out of the central position.

A problem which may be encountered with such an arrangement is the difficulty of moving the pivot arm between the locked and unlocked positions if the support strut is under tension - as will typically be the case when an implement is mounted. Modern agricultural implements tend to be large and heavy such that they cannot readily be pushed to the left or right to relieve the tension on the support strut.

It is an object of the present invention to at least partially mitigate such problems.

In accordance with a first aspect of the present invention there is provided a locking mechanism for an implement link of an agricultural vehicle, comprising:
a support strut connectable at one end thereof to an implement link;
a housing connectable to a frame of a vehicle;
an arm pivotably connected at a first end thereof to an end of the support strut remote from the implement link, said arm having a recess in a second end thereof and being pivotably mounted to the housing at a point between the first and second ends of the arm;
a locking body mounted to the housing and being movable relative thereto between a locked position within the arm recess and an unlocked position clear of the recess, wherein the arm is prevented from rotating about its pivotable mount when the locking body is in the locked position; and
a tensioning device rotatably coupled with the locking body and movable between a first position in which the locking body is held in the unlocked position and a second position in which the locking body can move to the locked position when the locking body and arm recess are aligned.

The present invention also provides an agricultural vehicle including at least one implement link supported on a frame thereof, and a locking mechanism as recited in the preceding paragraph, said locking mechanism being connected to the vehicle frame and the support strut being connected to the implement link.

With such an arrangement of locking mechanism, it is no longer necessary to lock each support strut separately when under tension: instead the tensioning device "pre-stresses" the locking mechanism to the desired locked/unlocked condition and the locking body will move to engage/disengage the arm recess when the two are aligned. Suitably, the second end of the arm defines a profiled or arcuate surface either side of the recess with the tensioning device includes spring means urging the locking body against said arcuate surface when in the second position (i.e. pre-stressed to lock).

As will be discussed in greater detail below, with reference to exemplary embodiments of the invention, the locking mechanism may be operated manually by a lever on the mechanism by operation of which the tensioning device is movable between the first and second positions. Alternately or additionally a remote operation means may be provided for the locking mechanism, for example in the cab of the vehicle, such that the operator does not need to leave the cab to effect the locking and unlocking of the linkage arms.

Further features of the present invention are recited in the attached subclaims to which reference should now be made.

Embodiments of the present invention will now be described, by way of example only and with reference to the accompanying drawings in which:
Figure 1 is a perspective view of the rear of a tractor employing a first embodiment of locking mechanism according to the invention for the selective stabilisation of a lower linkage arm;
Figure 2 shows the locking mechanism of Figure 1 separated from the tractor;
Figures 3 to 7 are side elevational views of the locking mechanism of Figure 2 in a series of operational positions; and
Figure 8 is a side elevational view of an alternative embodiment of locking mechanism according to the invention.

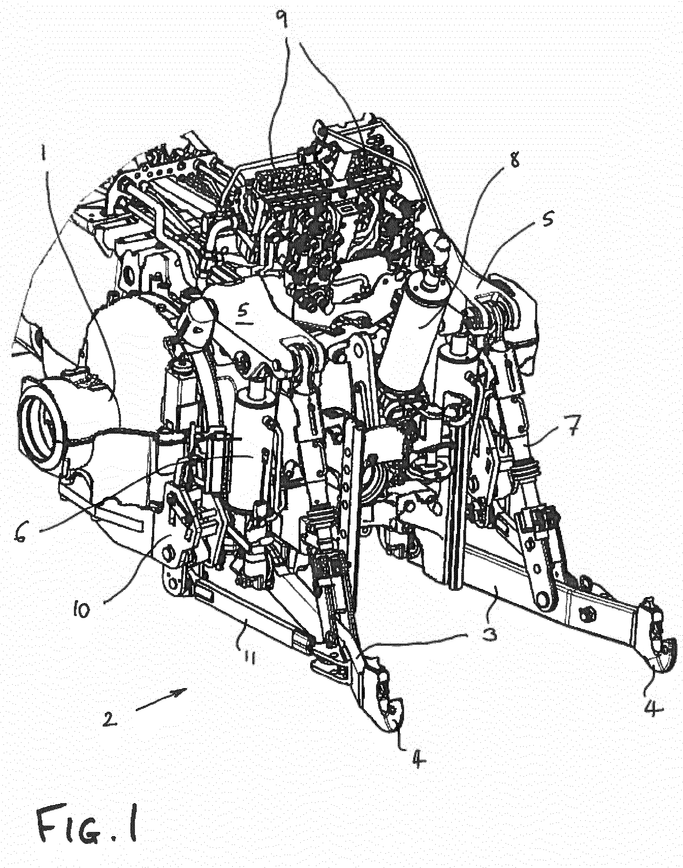

In Figure 1 part of the rear area of an agricultural tractor is shown, with the rear axle 1 and the implement mounting linkage indicated generally at 2. The implement mounting linkage 2 has two lower links in the form of lift arms 3 which are mounted on the middle part of the axle, which extend rearwards in respect of the normal direction of travel, and which at their free ends have hook elements 4 for the connection of an implement.

Rotatably mounted in the upper region of the middle part of the axle are raising arms 5 which are connected to respective powered raising devices in the form of hydraulic cylinders 6 which are supplied with pressurised fluid by the hydraulic system of the vehicle. The raising arms 5 are connected via raising struts 7 to the lift arms 3. Also rotatably mounted to the upper region of the middle part of the axle is a top link 8.

Thus with the aid of hydraulic cylinders 6, an implement connected to the three-point linkage 2 can be adjusted between a fully lowered position and a fully raised position in the normal manner. A multi-way coupler 9 mounted above the axle provides a source of pressurised hydraulic fluid for the implement.

In the embodiment of the implement mounting linkage 2 described hitherto, the lift arms 3 can pivot at any height position about mounts on the middle part of the axle. An implement which is being carried by the lift arms 3 will therefore be able to move to and fro during work operation on the field under the effect of transverse forces transverse to the direction of travel of the vehicle. This is desirable if, for example, a plough is involved. If other types of equipment are used, such as sprayers, for example, which are not intended to carry out any lateral movements in relation to the vehicle during work operation, they must therefore be connected to the vehicle in a laterally stable manner. Further during transport operation on the road the lateral movement of the lift arms 3 must be prevented if an implement is connected thereto. In order to fulfil this requirement, a locking mechanism 10 (mounted on the rear axle or vehicle frame) is allocated to at least one of the two lift arms 3 to provide them with lateral stabilization by means of a respective lateral support strut 11 extending to the lift arm 3.

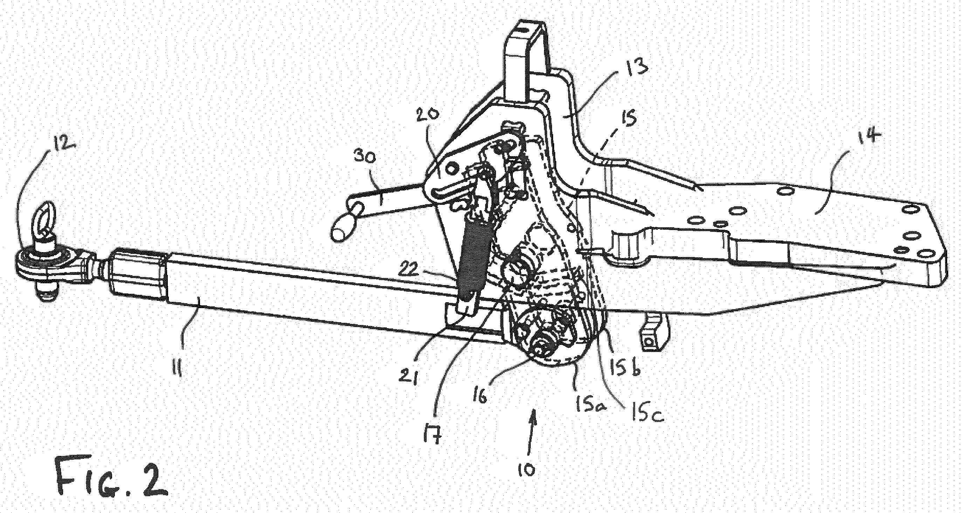

Figure 2 shows the locking mechanism 10 separated from the tractor. The support strut 11 has a pivoting connector 12 at one end thereof to enable pivoting connection to the implement link (lift arm 3). A housing 13 of the mechanism includes a bracket portion 14 by means of which the mechanism 10 is connectable to a frame or axle housing of a vehicle, suitably by bolts or screws (not shown).

At the opposite end to connector 12, the support strut 11 is received between two parallel plates 15a, 15b at the lower end of an arm portion 15 and pivotably connected by pin 16 extending between the plates and through an aperture in the support strut. When the arm portion 15 is locked in position relative to the housing 13 (described in further detail below), the support strut 11 is able to pivot up and down in a plane generally parallel to plates 15a, 15b as the lower links 3 are raised and lowered, but the strut 11 (and hence the connected link 3) is constrained against lateral movement.

The arm portion 15 has a pivoting attachment 17 to the housing 13 at approximately mid-height and has a recess 18 in the upper end thereof. A locking body 19 is mounted to the housing and is movable upwards and downwards in an aperture 13a of the housing between a lower (locked) position within the arm portion recess 18 and an upper (unlocked) position clear of the recess. The arm portion 15 is prevented from rotating about its pivoting attachment 17 when the locking body 19 is in the locked position, and hence the support strut 11 and link 3 are constrained.

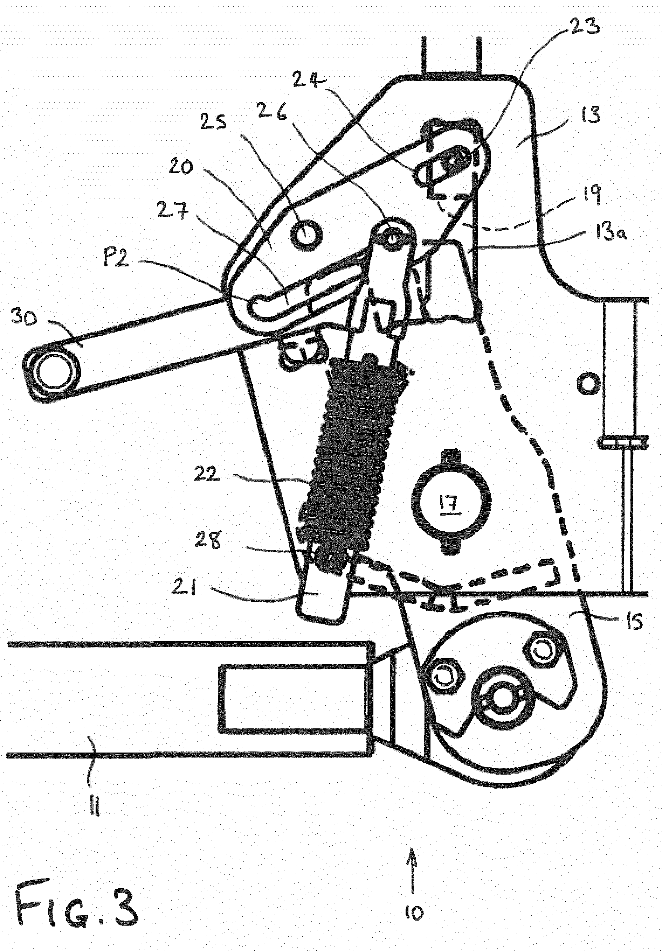

A tensioning device 20, 21, 22 is rotatably coupled with the locking body 19 and movable between a first position in which the locking body is held in the unlocked position and a second position in which the locking body can move to the locked position when the locking body 19 and arm recess 18 are aligned, as described below with reference to Figures 3 to 7. The tensioning device comprises a first link plate 20, second link plate 21, and spring 22. The first link plate 20 is coupled at a first location with the locking body 19 by means of a protrusion 23 of the locking body engaging a first slot 24 in the first link plate. The first link plate 20 is further rotatably coupled at a second location 25 with the housing 13.

The locking mechanism 10, especially the locking body 19 and tension device 20, 21, 22, are only needed on one side to provide lateral stabilization. The parts 13 and 15 are mounted on each side, because the C-shaped part 15c linking plates 15a and 15b further provides a centring device for a middle position of the lower links 3 if the support strut 11 and lower links 3 move upward.

The upper end of the second link plate 21 is slidably connected to the first link plate 20 through a connecting pin 26 of the second link plate 21 received in a second slot 27 in the first link plate. The second slot 27 runs substantially parallel to a line between the first 23 and second 25 locations, with first and second ends of the slot (indicated at P1 and P2) being substantially equidistant from the second location 25. At positions P1 and P2 the second slot 27 has short lateral extensions each providing a detent in which the connecting pin 26 is received and held under pressure from the spring 22.

The lower end of the second link plate 21 is pivotably connected to the housing 13 by means of a pin (or other protrusion) 28 extending from the housing through a slot 29 in the second link plate. The pin 28 provides the lower support for compression spring 22 which is disposed around the second link plate 21 and attached thereto at its upper end, thereby serving to urge the upper end and connecting pin 26 upwards.

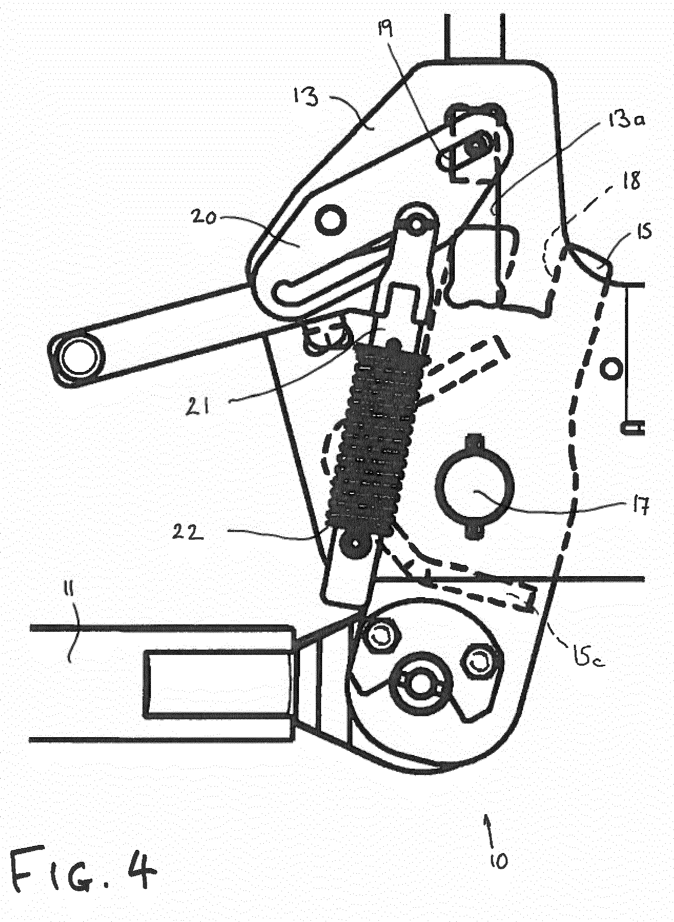

Turning now to the sequence of Figures 3 to 7, this begins in Figure 3 with the tensioning device in a first position, that is to say with connecting pin 26 at position P1 in a first detent of the second slot 27. In this position, the first link plate 20 is rotated anti-clockwise about second location 25 such that the locking body 19 is pushed to the upper end of aperture 13a in the housing. With the locking body 19 held in this position, it cannot engage recess 18 in the arm portion 15, and accordingly the arm portion is unlocked and free to pivot about attachment point 17 (as in Figure 4).

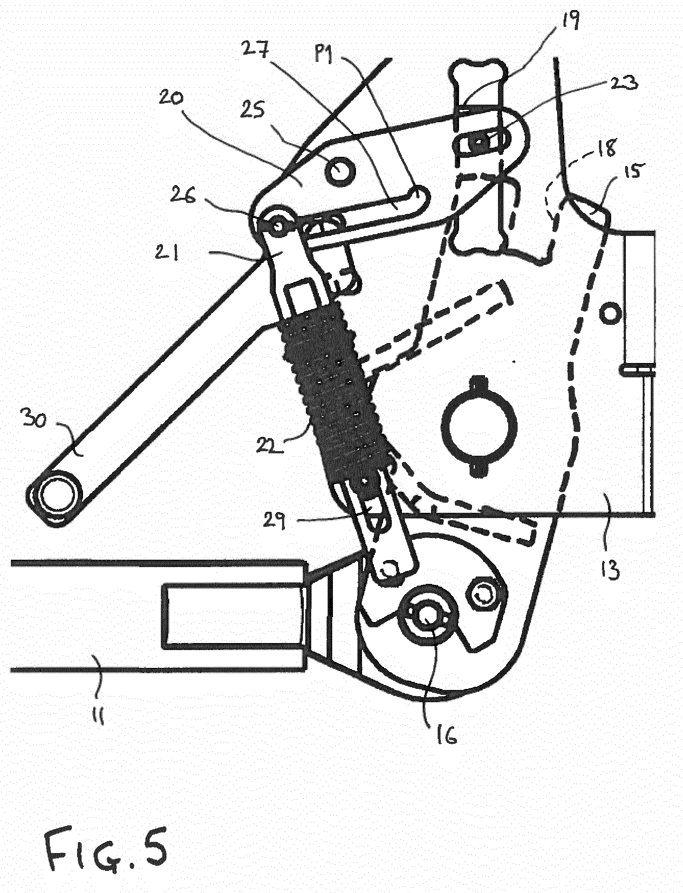

In Figure 5, manual lever 30 coupled to the second link plate 21 has been used to move the tensioning device to a second position, that is to say with connecting pin 26 at position P2 in second slot 27. In this position, the spring 22 is compressed (also necessary to release the pin 26 from the detent) and urges the first link plate 20 to rotate clockwise about second location 25. The extent of this rotation, which causes the locking body 19 to move downwards in aperture 13a, is constrained when the locking body encounters the upper end of the arm portion 15. Suitably the upper end defines an arcuate surface either side of the recess 18 on which the locking body 19 can ride as the arm portion 15 continues to pivot about attachment point 17.

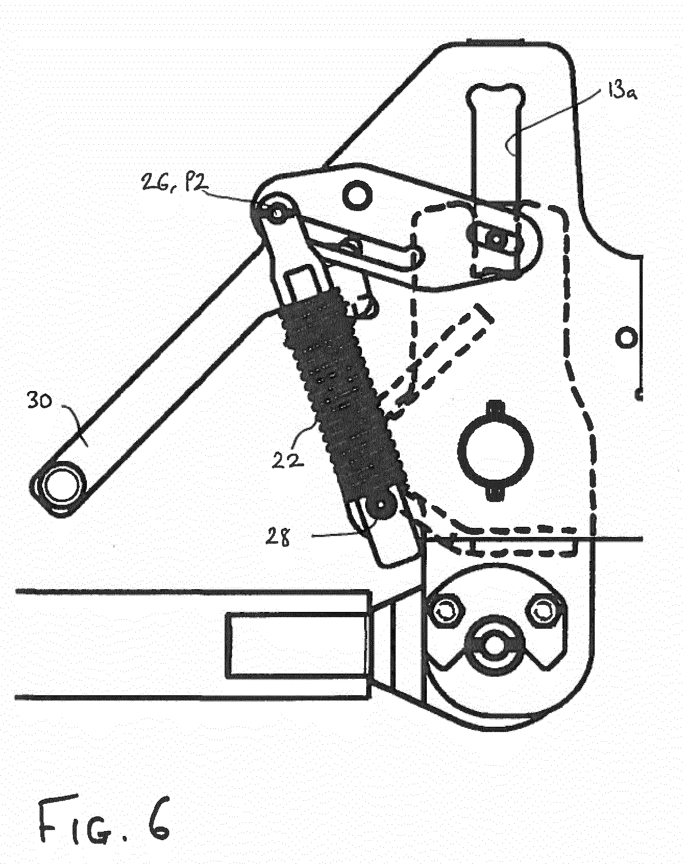

In Figure 5, the locking mechanism is in the primed or pre-stressed condition, which is to say with pin 26 at position P2, but with arm portion 15 still able to pivot. However, when the rotating movement of the arm portion brings the recess 18 into alignment with the aperture 13a in the housing, then as shown in Figure 6 the spring 22 expands, causing further clockwise rotation of the first link plate 20 and bringing the locking body 19 into the recess 18. In this configuration, the mechanism is locked and arm portion 15 can no longer rotate.

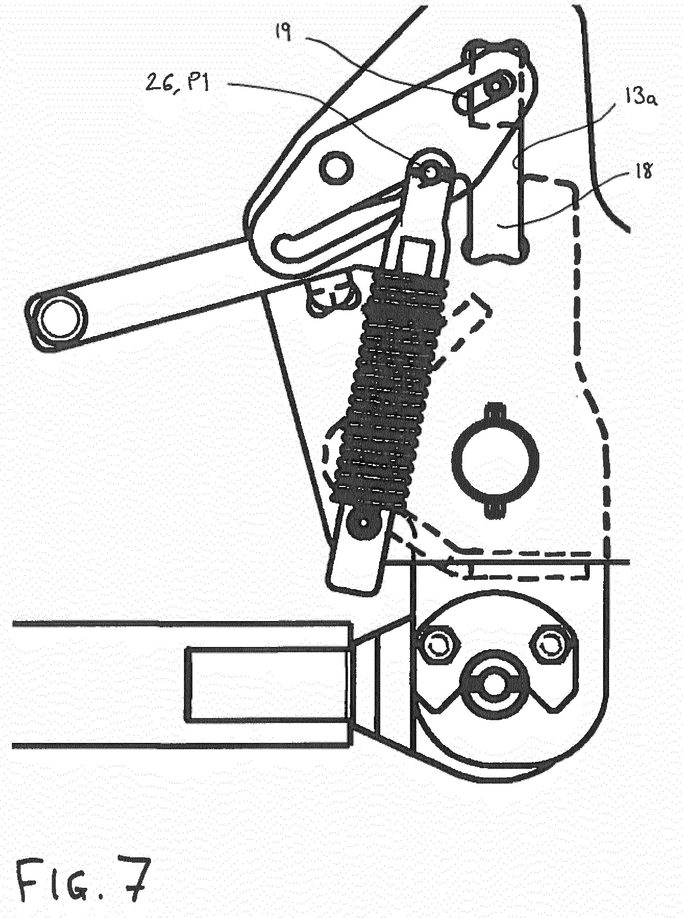

In Figure 7, the lever 30 has been operated to return pin 26 to position P1, resulting in the locking body 19 being lifted out of recess 18 (if the locking mechanism is free of tension) and thereby unlocking the mechanism again.

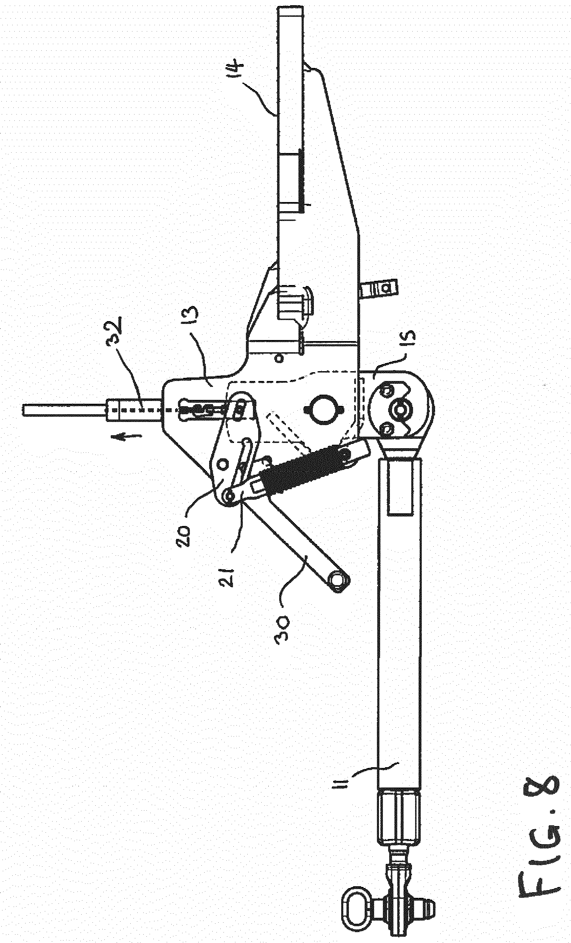

Figure 8 shows a further embodiment of the locking mechanism. The principal components and their operation are as for Figures 2 to 7 and will not be again described. The addition is the provision of remote operation means 32 by operation of which the locking body 19 may be moved from a locked to an unlocked position. Whilst an electro-mechanical actuator may be utilised, for simplicity and low cost the remote operation means 32 suitably simply comprises a control cable having a first end coupled to the locking body 19 and a second end coupled to actuating means (such as a pull handle) remote from the remainder of the locking mechanism, and preferably in the cab of the vehicle. With such an arrangement, the driver of the vehicle can simply disengage the lock by pulling on the control cable and without leaving the cab. Further it is possible to provide linkage or actuator means whereby it is possible to move the lever between the two positions from the cab.

In the foregoing there is described a locking mechanism for an implement link of an agricultural vehicle includes a support strut connectable at one end to the implement link, a housing, a pivoting arm, a locking body and a tensioning device. The arm is connected at a first end to the support strut remote from the implement link and has a recess in a second end. The locking body is slidably mounted to the housing and is movable between a locked position within the arm recess and an unlocked position clear of the recess. The tensioning device is a sprung linkage arrangement coupled with the locking body and movable between a first position in which the locking body is held in the unlocked position and a second position in which the locking body can move to the locked position when the locking body and arm recess are aligned.

From reading the present disclosure, it will be understood that additions or modifications are possible. For example, to make manual operation lighter, the lever 30 (Fig. 3) may be pivotably coupled to rotate about a fulcrum point on the housing giving increased leverage for compressing the spring 22 to release the pin 26 from the detents at P1 and P2. Additionally, or alternately, the detents at P1 and P2 may be omitted with second slot 27 being a simple linear slot. The scope of the present invention is defined by the attached claims.

## Claims

1. A locking mechanism (10) for an implement link of an agricultural vehicle, comprising:
a support strut (11) connectable at one end thereof to an implement link;
a housing (13) connectable to a frame of a vehicle;
an arm (15) pivotably connected at a first end thereof to an end of the support strut (11) remote from the implement link, said arm (15) having a recess (18) in a second end thereof and being pivotably mounted to the housing (13) at a point between the first and second ends of the arm;
a locking body (19) mounted to the housing (13) and being movable relative thereto between a locked position and an unlocked position;
**characterised in that** the locking body (19) is within the arm recess (18) in the locked position and clear of the recess in the unlocked position, wherein the arm (15) is prevented from rotating about its pivotable mount when the locking body is in the locked position;
the mechanism further comprising a tensioning device (20, 21, 22) rotatably coupled with the locking body (19) and movable between a first position in which the locking body is held in the unlocked position and a second position in which the locking body can move to the locked position when the locking body (19) and arm recess (18) are aligned.

2. A locking mechanism as claimed in claim 1, wherein the second end of the arm (15) defines an arcuate surface either side of the recess (18) and the tensioning device includes spring means (22) urging the locking body (19) against said arcuate surface when in the second position.

3. A locking mechanism as claimed in claim 1, wherein the tensioning device includes a link plate (20) rotatably coupled at a first location with the locking body (19) and at a second location with the housing (13), together with spring means (22) coupled between the link plate (20) and housing (13) to urge rotation of the link plate about the second location.

4. A locking mechanism as claimed in claim 3, wherein the coupling of the spring means (22) to the link plate (20) is through a connecting pin (26) movable in a slot (27) in the link plate.

5. A locking mechanism as claimed in claim 4, wherein the slot (27) runs substantially parallel to a line between the first and second locations, with first and second ends of the slot being substantially equidistant from the second location.

6. A locking mechanism as claimed in any preceding claim, further comprising a manually operable lever (30) by operation of which the tensioning device (20, 21, 22) is movable between the first and second positions.

7. A locking mechanism as claimed in any preceding claim, further comprising remote operation means (32) by operation of which the locking body (19) may be moved from a locked to an unlocked position.

8. A locking mechanism as claimed in claim 7, wherein the remote operation means (32) comprises a control cable having a first end coupled to the locking body (19) and a second end coupled to actuating means remote from the remainder of the locking mechanism.

9. An agricultural vehicle including at least one implement link supported on a frame thereof, and a locking mechanism (10) as claimed in any of claims 1 to 8, said locking mechanism being connected to the vehicle frame and the support strut being connected to the implement link.

10. An agricultural vehicle as claimed in claim 9, said vehicle having a three-point linkage with each of the lower links having a respective locking mechanism (10) coupled thereto.

## Patentansprüche

1. Verriegelungsmechanismus (10) für eine Anbaugerätkupplung eines landwirtschaftlichen Fahrzeugs, mit:
einer an ihrem einen Ende mit einer Anbaugerätkupplung verbindbaren Stützstrebe (11);
einem mit einem Rahmen eines Fahrzeugs verbindbaren Gehäuse (13);
einem Arm (15), der mit seinem ersten Ende mit einem von der Anbaugerätkupplung wegweisenden Ende der Stützstrebe (11) schwenkbar verbunden ist, wobei der Arm (15) an seinem zweiten Ende eine Öffnung (18) aufweist und an einem Punkt zwischen dem ersten Ende und dem zweiten Ende des Arms schwenkbar an dem Gehäuse (13) befestigt ist;
einem Verriegelungskörper (19), der an dem Gehäuse (13) befestigt und relativ dazu zwischen einer verriegelten Stellung und einer unverriegelten Stellung bewegbar ist;
**dadurch gekennzeichnet, dass** der Verrieglungskörper (19) in der verriegelten Stellung in der Armöffnung (18) angeordnet und in der unverriegelten Stellung frei von der Öffnung ist, wobei der Arm (15) an einer Drehung um seine Schwenkbefestigung gehindert ist, wenn sich der Verriegelungskörper in der verriegelten Stellung befindet;
wobei der Mechanismus weiterhin eine Spannvorrichtung (20, 21, 22) aufweist, die mit dem Verriegelungskörper (19) drehbar verbunden und zwischen einer ersten Stellung, in der der Verriegelungskörper in der unverriegelten Stellung gehalten ist, und einer zweiten Stellung beweglich ist, in der sich der Verriegelungskörper in die verriegelte Stellung bewegen kann, wenn der Verriegelungskörper (19) und die Armöffnung (18) zueinander ausgerichtet sind.

2. Verriegelungsmechanismus nach Anspruch 1, wobei das zweite Ende des Arms (15) an beiden Seiten der Ausnehmung (18) eine bogenförmige Oberfläche bildet und die Spannvorrichtung ein Federmittel (22) aufweist, das den Verriegelungskörper (19) in der zweiten Stellung gegen die bogenförmige Oberfläche beaufschlagt.

3. Verriegelungsmechanismus nach Anspruch 1, wobei die Spannvorrichtung eine Verbindungsplatte (20) aufweist, die an einem ersten Ort drehbar mit dem Verriegelungskörper (19) und an einem zweiten Ort mit dem Gehäuse (13) gemeinsam mit einem Federmittel (22) verbunden ist, wobei das Federmittel (22) zwischen der Verbindungsplatte (20) und dem Gehäuse (13) angeordnet ist, um eine Drehung der Verbindungsplatte um den zweiten Ort hervorzurufen.

4. Verriegelungsmechanismus nach Anspruch 3, wobei die Verbindung des Federmittels (22) mit der Verbindungsplatte (20) durch einen Verbindungsstift (26) erfolgt, der in einem Schlitz (27) in der Verbindungsplatte beweglich ist.

5. Verriegelungsmechanismus nach Anspruch 4, wobei der Schlitz (27) im Wesentlichen parallel zu einer Linie zwischen dem ersten Ort und dem zweiten Ort verläuft, wobei das erste Ende und das zweite Ende des Schlitzes im Wesentlichen äquidistant zu dem zweiten Ort angeordnet sind.

6. Verriegelungsmechanismus nach einem der vorhergehenden Ansprüche, weiterhin mit einem manuell betätigbaren Hebel (30), durch dessen Betätigung die Spannvorrichtung (20, 21, 22) zwischen der ersten Stellung und der zweiten Stellung bewegbar ist.

7. Verriegelungsmechanismus nach einem der vorhergehenden Ansprüche, weiterhin mit einem entfernt angeordneten Betätigungsmittel (32), durch dessen Betätigung der Verriegelungskörper (19) von einer verriegelten Stellung in eine unverriegelte Stellung bewegbar ist.

8. Verriegelungsmechanismus nach Anspruch 7, wobei das entfernt angeordnete Betätigungsmittel (32) ein Steuer-/Regelkabel mit einem mit dem Verriegelungskörper (19) verbundenen ersten Ende und einem zweiten Ende aufweist, das mit einem Auslösemittel verbunden ist, das entfernt zu dem Rest des Verriegelungsmechanismus angeordnet ist.

9. Landwirtschaftliches Fahrzeug mit mindestens einer an einem Rahmen gelagerten Anbaugerätkupplung und einem Verriegelungsmechanismus (10) nach einem der Ansprüche 1 bis 8, wobei der Verriegelungsmechanismus mit dem Fahrzeugrahmen und die Stützstrebe mit der Anbaugerätkupplung verbunden ist.

10. Landwirtschaftliches Fahrzeug nach Anspruch 9, wobei das Fahrzeug eine Dreipunktaufhängung aufweist, wobei jede der unteren Aufhängungen einen entsprechenden damit verbundenen Verriegelungsmechanismus (10) aufweist.

## Revendications

1. Dispositif de verrouillage (10) destiné à un élément de liaison d'outillage d'un véhicule agricole, comprenant :
une traverse de support (11) pouvant être raccordée par une première extrémité de celle-ci à un élément de liaison d'outillage ;
un boîtier ( 13) pouvant être raccordé à un châssis d'un véhicule ;
un bras (15) raccordé de manière à pouvoir pivoter par une première de ses extrémités à une extrémité de la traverse de support (11) distante par rapport à l'élément de liaison d'outillage, ledit bras (15) comportant une cavité (18) à une seconde de ses extrémités et étant monté de manière à pouvoir pivoter sur le boîtier ( 13) à un point entre les première et seconde extrémités du bras ;
un corps de verrouillage (19) monté sur le boîtier (13) et pouvant être déplacé par rapport à celui-ci entre une position verrouillée et une position déverrouillée ;
**caractérisé en ce que** le corps de verrouillage (19) est à l'intérieur de la cavité de bras (18) dans la position verrouillée et hors de la cavité dans la position déverrouillée, dans lequel la rotation du bras (15) est empêchée autour de son point de montage pivotant lorsque le corps de verrouillage est en position verrouillée ;
le mécanisme comprenant en outre un dispositif de tension (20, 21, 22) couplé de manière à pouvoir tourner avec le corps de verrouillage (19) et pouvant être déplacé entre une première position dans laquelle le corps de verrouillage est maintenu dans la position déverrouillée et une seconde position dans laquelle le corps de verrouillage peut se déplacer vers la position verrouillée lorsque le corps de verrouillage (19) et la cavité de bras (18) sont alignés.

2. Dispositif de verrouillage selon la revendication 1, dans lequel la seconde extrémité du bras (15) définit une surface courbe de chaque côté de la cavité (18) et le dispositif de tension comporte un moyen élastique (22) appliquant le corps de verrouillage (19) contre ladite surface courbe lorsqu'il est dans la seconde position.

3. Dispositif de verrouillage selon la revendication 1, dans lequel le dispositif de tension comporte une plaque de liaison (20) couplée de manière à pouvoir tourner au niveau d'un premier emplacement avec le corps de verrouillage (19) et au niveau d'un second emplacement avec le boîtier (13), ensemble avec un moyen élastique (22) couplé entre la plaque de liaison (20) et le boîtier (13) afin de mettre en rotation la plaque de liaison autour du second emplacement.

4. Dispositif de verrouillage selon la revendication 3, dans lequel le couplage du moyen élastique (22) à la plaque de liaison (20) est assuré au moyen d'une broche de liaison (26) pouvant se déplacer dans une fente (27) sur la plaque de liaison.

5. Dispositif de verrouillage selon la revendication 4, dans lequel la fente (27) s'étend sensiblement parallèlement à une ligne entre les premier et second emplacements, les première et seconde extrémités de la fente étant sensiblement équidistantes par rapport au second emplacement.

6. Dispositif de verrouillage selon l'une quelconque des revendications précédentes, comprenant en outre un levier pouvant être commandé manuellement (30), par la commande duquel le dispositif de tension (20, 21, 22) peut être déplacé entre les première et seconde positions.

7. Dispositif de verrouillage selon l'une quelconque des revendications précédentes, comprenant en outre un moyen de commande à distance (32) par la commande duquel le corps de verrouillage (19) peut être déplacé d'une position verrouillée à une position déverrouillée,

8. Dispositif de verrouillage selon la revendication 7, dans lequel le moyen de commande à distance (32) comprend un câble de commande comportant une première extrémité couplée au corps de verrouillage (19) et une seconde extrémité couplée au moyen de commande distant par rapport au reste du dispositif de verrouillage.

9. Véhicule agricole comportant au moins un élément de liaison d'outillage supporté sur un châssis de celui-ci, et un dispositif de verrouillage (10) selon l'une quelconque des revendications 1 à 8, ledit dispositif de verrouillage étant relié au châssis de véhicule et la traverse de support étant couplée à l'élément de liaison d'outillage.

10. Véhicule agricole selon la revendication 9, ledit véhicule comprenant un élément de liaison en trois points, chacune des biellettes inférieures étant couplée à un dispositif de verrouillage (10) respectif.
